# EUROPEAN PATENT SPECIFICATION

(11) **EP 4 168 861 B1**
(45) Date of publication and mention of the grant of the patent: **14.10.2026**
(21) Application number: 20771468.4
(22) Date of filing: 31.08.2020
(51) Int. Cl.: G05B 13/02, G05B 19/4065

(54) **METHOD, APPARATUS AND COMPUTER PROGRAM FOR MONITORING A MILLING MACHINE**
VERFAHREN,VORRICHTUNG UND COMPUERPROGRAM ZUR ÜBERWACHUNG EINER FRÄSMASCHINE
PROCÉDÉ, DISPOSITIF ET PROGRAMME INFORMATIQUE POUR LA SURVEILLANCE D'UNE FRAISEUSE

(43) Date of publication of application: 26.04.2023
(73) Proprietor: Siemens Aktiengesellschaft, 80333 München (DE)
(72) Inventor: DEICHMANN, Jonas, 50825 Köln (DE); ROTHERING, Marcel, 90449 Nürnberg (DE); SEDENO, Aldo, 90402 Nürnberg (DE)
(74) Representative: Siemens Patent Attorneys
(86) International application number: PCT/EP2020/074228
(87) International publication number: WO 2022/042866

(56) References cited:
- EP-A1- 3 608 501
- CN-B- 107 678 398
- US-A1- 2019 152 011
- US-A1- 2019 324 413

## Description

### TECHNICAL FIELD

The invention relates to a method and a device for monitoring a milling machine, in particular by means of machine learning.

### BACKGROUND

Patent application US 2016/091393 A1 describes a method or system for forecasting and planning in production facilities. In order to detect tool wear, the performance of the spindle is monitored, among other things. In order to compensate for tool wear, the performance of the spindle and thus its speed of rotation are increased. The long-term trend of the spindle's performance is extrapolated in order to predict the remaining useful life.

The patent application US 2007/088550 A1 describes a method for predictive maintenance of a machine. For this purpose, data relating to the operation of the machine, such as vibration, speed or current, are recorded. So-called features are generated from this data in order to make an error prediction.

The patent application US 2004/179915 A1 describes a machine tool. For the analysis of the behavior of the machine tool, signals called signature variables are recorded there and used as input variables for an artificial neural network.

US 8781982 B1 describes a method and a device for determining the remaining useful life. For this purpose, operating data are fed into an artificial neural network. The operating data can be vibration data, acoustic data and acceleration data.

Furthermore, European patent application EP19166079 and international patent application PCT/EP2020/058069 disclose methods and devices for monitoring a milling process by means of artificial intelligence.

A model training apparatus using a supervised anomaly detection algorithm is known from US 2019/152011 A1, wherein an anomaly detection tracking a temporal trend of a data is performed with retraining the model using past test data as new training data. Models using training data are known from US 2019/324413 A1 and EP 3 608 501.

### SUMMARY

Milling is generally a cutting manufacturing process for the production of workpieces with a geometrically defined shape. During milling, material is removed by rotating the milling tool or milling head at high speed around its own axis, while either the milling tool itself follows the contour to be produced on the workpiece or the workpiece is moved accordingly relative to the milling head. Milling machines can be used for milling different workpieces, in particular also for milling printed circuit boards. For example, dividing lines can be produced between conductor track surfaces of a circuit board by milling. A large amount of dust can arise during the milling process, so that the milling spindle can get stuck after a certain operating time. In conventional milling machines, such errors or failures are only detected after the respective error, for example the blocking of the milling spindle, has occurred. A failure of a milling machine during a milling process can lead to a significant delay in the manufacturing process of the object to be manufactured. In addition, the workpiece that is not finished in this manufacturing step is in many cases a reject product and cannot be processed further or may need to be tested for proper functioning. A standstill of a milling machine during an ongoing manufacturing process requires the immediate use of maintenance personnel or service technicians to carry out maintenance or repair measures. In many cases such service technicians are not immediately available and have to be requested. This can lead to a temporary standstill of an entire production line within a factory.

In addition, milling machine may be operated in different modes, for example depending on the specific application of the respective milling machine. For example, in a production line a plurality of milling machines may be operated, wherein the operation of each milling machine is subject to individual conditions, e.g. dependent on the wear of the respective milling heads.

It is therefore an object of the present invention to create a method and a device for monitoring a milling process which predicts possible failures due to an affected milling machine at an early stage so that countermeasures can be taken in good time. That is to say, before a breakdown of the milling machine. By an early identification of a breakdown the time a milling machine is stopped can be reduced to a minimum. It is a further object of the invention to enable monitoring of a milling machine independent of the type of the milling machine and independent of the specific application, e.g., workpiece production, the milling machine is used in.

The object is achieved by the following aspects.

According to a first aspect the object is achieved by a method of monitoring a milling machine according to the features of claim 1. The method comprising the step of deploying an untrained machine learning model for determining one or more anomalies in time series data. The method further comprising obtaining by the untrained machine learning model, preferably from a converter powering the milling machine, during operation of the milling machine, first time series data representing a rotational speed of a milling head of the milling machine and at least one further operating parameter of the milling machine, the at least one further operating parameter preferably corresponds to the supply current or is dependent on the supply current of the milling machine. The method further comprising training the machine learning model, during operation of the milling machine, based on the obtained first time series data. The method further comprising obtaining, by the trained machine learning model, during operation of the milling machine, second time series data representing the rotational speed of the milling head of the milling machine and the further operating parameter. The method further comprising determining by the trained machine learning model, during operation of the milling machine, one or more anomalies in the second time-series data.

According to a second aspect the object is achieved by a computer program product. The computer program product comprising program code that when executed performs the steps of the first aspect.

According to a third aspect the object is achieved by an apparatus, e.g., a milling machine, an edge device and/or a cloud platform, preferably comprising a processor and memory. The apparatus being operative to perform the steps of the first aspect.

### BRIEF DESCRIPTION OF THE DRAWINGS

- Figure 1: shows a flowchart to illustrate a possible embodiment of monitoring a milling process.
- Figure 2: shows a block diagram to illustrate an exemplary embodiment of a milling machine.
- Figure 3: shows a block diagram to illustrate a further possible embodiment of the milling machine.
- Figure 4: shows a plurality of milling machines each of which may be monitored in accordance with an embodiment.
- Figure 5: shows operational patterns of different milling spindles, wherein the rotational speed (x-axis) and the electrical current is illustrated.
- Figure 6: shows operational patterns of different milling spindles, after the removal of a ramp-up and ramp-down phases.
- Figure 7: shows first and second time series data of the milling machine.
- Figure 8: shows exemplary methods steps of an embodiment.
- Figure 9: shows exemplary methods steps of another embodiment.
- Figure 10: shows exemplary methods steps of another embodiment.
- Figure 11: shows exemplary methods steps of another embodiment.
- Figure 12: shows exemplary methods steps of another embodiment.
- Figure 13: shows exemplary methods steps of another embodiment.
- Figure 14: shows exemplary methods steps of another embodiment.
- Figure 15: shows exemplary methods steps of another embodiment.
- Figure 16: shows exemplary methods steps of another embodiment.

### DETAILED DESCRIPTION

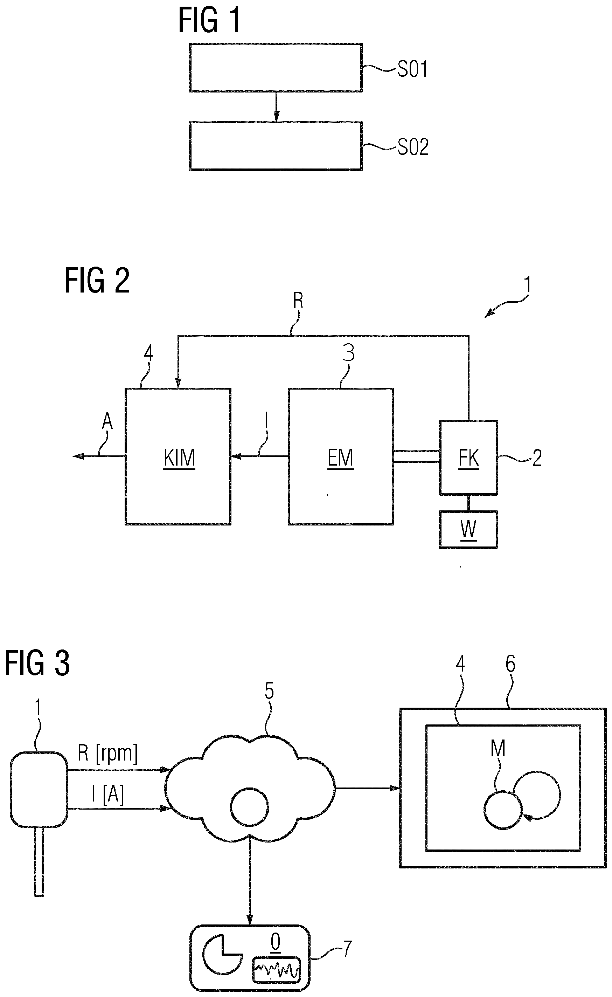

As can be seen from the flow chart according to FIG. 1, the method for monitoring a milling machine may comprise multiple steps in the illustrated embodiment.

In a first step S01, a rotational speed or speed of rotation of a milling head 2 of a milling machine 1 is recorded. Furthermore, in step S01 at least one further operating parameter of the milling machine 1 is recorded during the milling process. This further operating parameter has, for example, an electrical supply current for operating the milling machine 1. This electrical supply current is used, for example, to supply an electric motor 3 which drives the milling head 2 of the milling machine 1.

In a further step S02, the detected rotational speed R and the detected operating parameters, in particular the electrical supply current I, are evaluated by a trained machine learning model for recognizing anomalies A during the milling process.

In a further possible step (not shown in FIG. 1), after anomalies have been detected, a message is generated for the operator of the milling machine 1. For example, anomalies recognized can be displayed in real time on a display unit of the milling machine 1. Furthermore, in a further step, maintenance measures for eliminating possible causes of the anomalies A recognized can be automatically initiated. After the detection of anomalies during the milling process in step S2, a failure probability or a probable failure period of the relevant milling machine 1 is calculated in one possible embodiment. Possible maintenance measures can be tailored to the calculated failure probability and / or the expected failure period. For example, milling machines 1 with a high probability of failure are serviced or repaired with a high degree of urgency or priority. Furthermore, on the basis of the calculated anticipated downtime periods, it can be controlled which maintenance measures are carried out on which milling machines 1 in which period. In a further possible embodiment, after anomalies have been identified during the milling process, at least one possible cause for the occurrence of the anomalies A is determined, for example wear or blocking of a drive spindle.

In one possible embodiment, the machine learning model used to determine anomalies is based may comprise a One-Step-Ahead Predictor, such as ARIMA, a Spatial Detector, such as an SVM, or a Naïve threshold. Of course, other machine learning models such as an artificial neural network may be used. The machine learning model is preferably trained in a training phase after the start of a milling process. This makes it possible to uninterruptedly operate the production and at the same time upgrade the monitoring of the milling machine or milling process. To that end, training data with regard to the rotational speed R and the at least one further operating parameter P of the milling machine 1 is obtained during operation of the milling machine.

The machine learning model that is used to recognize the anomalies can, in one possible embodiment, be downloaded as an application (app) from a database via a network into a computing unit of the milling machine 1 and trained in a training phase during the milling process, i.e. during operation of the milling machine. In one possible embodiment, the workpiece W to be milled by the milling machine 1 has a printed circuit board.

The detection of the rotational speed R and the further operating parameter, in particular the supply current I, in step S01 is carried out in a possible embodiment on the basis of corresponding data, which at a data rate of about 1/sec, i.e. 1 Hertz, are fed to the machine learning model. The determination or recognition of the anomalies in step S02 by the trained machine learning model takes place preferably in real time during the milling process, i.e. during the production process.

In particular, the detection of one or more (short-term) current peaks in the supply current, for example from approx. 5 to 10 seconds, is recognized as an anomaly. There is a sudden increase in the supply current with a subsequent, slowly decrease of the falling edge. Such an anomaly is caused, for example, by milling splinters that get into the milling spindle. There the milling splinters cause increased friction. By readjusting the supply voltage, the supply current is increased (sudden increase) in order to maintain a constant speed or rotational speed of the milling head. If the milling splinters are crushed by the rotary movement of the milling spindle, the supply current normalizes again (falling edge). This can be done in order to keep the rotation speed of the milling head or milling spindle constant. In order to detect an anomaly, the sampling rate of the supply current can also be suitably selected so that a current peak or anomaly is not missed by undersampling the supply current. Furthermore, the sampling rate of the supply current can be selected to be sufficiently low at the same time, so that no excessive amounts of data arise.

Finally, a quality indicator can be formed that indicates whether the detected measuring points of the supply current are no longer in the normal range of the milling machine. The higher this value, for example, the more likely the measuring points are outside the normal range. The quality indicator can be formed as a function of rotation speed and supply current. On the basis of the number of anomalies that have occurred, a remaining service life or failure of the milling machine can then be determined or predicted.

According to one embodiment, a milling process in which milling splinters are produced, for example by milling a printed circuit board, is monitored, in particular in order to determine or predict a failure or a remaining useful life of the milling machine.

In a further embodiment, the supply current is monitored to determine whether there is a brief or transient deviation from a base value of the supply current and whether the supply current returns to this base value. This monitoring can be done by a trained, adaptive algorithm. Additionally, or alternatively, it is possible to provide a threshold value by which such a current peak of the supply current is recognized. Once such a current peak in the supply current has been detected, it can be monitored whether the supply current falls again below the threshold value, in particular to the base value of the supply current. The base value can be the value of the supply current from which the current peak develops. The base value of the supply current can be specified by the desired rotational speed of the milling machine, more precisely the spindle of the milling machine, or the rotational speed of the milling machine is specified by the basic value of the supply current. In addition, the frequency of such current peaks can be recorded and, depending on this, a failure of the milling machine or a remaining service life can be determined; this can be done, for example, by means of a quality indicator.

Sufficient sampling of the supply current is required to ensure that the current peaks are recognized. E.g. the supply current can be sampled in such a way that the current peaks caused by milling splinters that have entered the milling spindle can be detected. For example, the supply current can be sampled approximately once per second or more often than once per second.

In a further embodiment it is monitored whether there is a change, in particular a current peak, in the supply current at (essentially) constant rotation speed. This change in the supply current is caused, for example, by the grinding of milling chips. The supply current can therefore be monitored for current peaks resulting from the grinding of milling splinters, in particular with a constant rotation speed of the milling head or the milling spindle. These current peaks can have a typical profile. This typical characteristic of a current peak described above can be monitored and / or detected, for example, by a trained machine learning model. For this purpose, the machine learning model is trained during operation of the milling machine since each milling machine may either be operated in different operation modes, may be parameterized to perform a specific task etc. A current peak can then be recognized as an anomaly by the trained machine learning model. In particular, the trained, machine learning model can distinguish current peaks caused by the grinding of milling splinters from current peaks of other origin.

In addition, the machined workpiece can be a workpiece made of a homogeneous material, or a section of the workpiece that is machined by the milling machine, which section consists of a homogeneous material. This ensures that a constant rotation speed of the milling head can be assumed. Otherwise there would be changes in the case of inhomogeneities in the workpiece in the rotation speed, or the rotation speed would have to be adapted depending on the section of the workpiece being machined. Provision can thus be made for several sections to be machined with different predetermined target rotational speeds, i.e. speed setpoints. The respective target rotation speed can serve as a base value for detecting current peaks.

Instead of the supply current or together with the supply current, the supply voltage can also be recorded and evaluated. Instead, other variables derived from the supply current and / or supply voltage can also be used for monitoring the milling process or for predicting a remaining useful life or failure probability of the milling machine.

Printed circuit boards consist of electrically insulating material with conductive connections (conductor tracks) adhering to them. Fiber-reinforced plastic, or hard paper for cheaper devices, is the usual insulating material. The conductor tracks mostly consist of a thin layer of copper.

Printed circuit boards can also be structured by milling the copper layers ("isolation milling",). Such circuit boards do not consist of conductor tracks, but of surfaces that are separated from each other by milling tracks.

In the milling technique, a milling machine, for example a pin milling cutter, creates dividing lines between the conductor surfaces. All copper remains in place (island process). The wet chemical and photolithographic steps are omitted. CNC programs can be generated with special CAD software so that circuit boards can be manufactured quickly.

FIG. 2 shows a block diagram to illustrate an embodiment of a milling machine 1 according to the invention. The milling machine 1 shown in FIG. 2 is used for milling a workpiece W. The workpiece W is, for example, a printed circuit board. The milling machine 1 has at least one rotatable milling head 2, FK for machining the workpiece W in a milling process. The milling head 2, FK is driven by an electric motor 3, EM of the milling machine 1. Here, the electric motor 3, EM draws an electrical supply current. The supply current can comprise one or more current phases (L1, L2, L3). The milling machine 1 according to the invention may be operatively coupled to a machine learning module 4, KIM as shown in Figure 2. The machine learning module 4, KIM detects during the milling process on the basis of a detected rotational speed R of the milling head 2 and at least one other operating parameter I of the milling machine 1 anomalies that occur during the milling process. The machine learning module 4, KIM can evaluate several operating parameters I for the detection of anomalies A. In one possible embodiment, the machine learning module 4, KIM executes a trained machine learning model during the milling process.

The machine learning model of the machine learning module 4 is trained during the ongoing milling process. These training data may include, for example, power supply data and rotation speed data of the milling head 2, FK. These training data may be located in a data memory. In one possible embodiment, the training data are loaded from a database of the operator of the milling machine and used for training purposes.

The machine learning model no longer needs to be selected as a function of a type of milling machine 1 and / or a type of workpiece W to be milled in the milling process. In one possible embodiment, the machine learning model can also be downloaded from a database into the machine learning module 4, KIM of the milling machine 1. For example, the machine learning model can be downloaded via a data network from a cloud platform 6 of a milling machine manufacturer or a milling machine operator. Alternatively, the machine learning model may be deployed in the cloud platform as depicted in Fig. 3.

In an embodiment, the milling process itself can be controlled by a CNC program which is executed by a controller or microprocessor of the milling machine 1 according to the invention. During the milling process, a feed movement of the milling head 2, FK takes place perpendicular or obliquely to the axis of rotation of the milling head 2, FK. If the workpiece W is a printed circuit board, the milling machine 1 is controlled by software or a CNC program to generate paths that follow around desired conductor path. For example, the conductor track to be produced is insulated from a remaining conductive material, for example copper. This is also known as isolation milling. A small, conical milling head can be used to mill insulation channels, which removes conductive material, in particular copper, along the calculated movement paths. The removed material can block or impair the ability of the milling head 2, FK to move, such abnormalities or anomalies being recognized or detected early with the aid of the method according to the invention. In one possible embodiment, corresponding evaluation numbers can also be calculated for various anomalies A, which indicate the extent of the recognized anomaly or the failure probability resulting therefrom. In one possible embodiment, such anomaly key figures can be output to the operator of the milling machine 1 in real time via a display unit. With the method according to the invention, possible anomalies can be recognized around the clock during the ongoing milling process and possible causes of errors can be determined. As a result, repair and maintenance measures can be initiated or carried out on the relevant milling machine 1 in good time, so that downtimes within the milling process are largely avoided. The method according to the invention can be used for a large number of milling machines that are used simultaneously in a production line.

In the embodiment shown in FIG. 2, the machine learning module 4 is implemented locally in a computing unit of the milling machine 1. In an alternative embodiment, the machine learning module 4 can also be implemented on a remote server of a cloud platform 6, which communicates unidirectionally or bidirectionally with a control of the milling machine 1 via a data connection. In one possible embodiment, the technical data connection comprises a local network or intranet. Alternatively, the data connection can also be a global network or the Internet. The method according to the invention for monitoring the milling process is a computer-implemented method which, in one possible embodiment, is stored on a computer-readable medium. The computer-readable medium comprises, for example, a data memory of the milling machine 1. Furthermore, the computer-readable medium can also have a portable data carrier, for example a CD-ROM or a USB stick. Depending on the application, different adaptive algorithms can be used in one possible embodiment for the detection of anomalies during the milling process. For example, a support vector machine can be provided for calculating a quality indicator. In one possible embodiment, further sensors are provided in the vicinity of the milling head 2, which provide additional data to the artificial intelligence module 4. For example, image sensors can supply image data to the artificial intelligence module 4 as input operating parameters I of the state vector z. As a result, the reliability or accuracy of the method according to the invention can be increased further.

Figure 3 shows schematically a further exemplary embodiment for monitoring a milling machine during operation, i.e. a milling process. In the exemplary embodiment shown, the milling machine 1 supplies operating parameters recorded via an interface via a data network or a cloud 5 to a cloud platform 6 in which an artificial intelligence module 4 is integrated. Anomalies or information can be output to the operator of the milling machine 1 in real time via a display device 7. In one possible embodiment, the display device 7 is also connected to the data network or the cloud 5. In one possible embodiment variant, the display device 7 is a portable device, for example a smartphone belonging to the user. With the method according to the invention, deviations in the characteristic space of the operating parameters are detected at an early stage. With the aid of a machine learning model M, causes for the occurrence of anomalies or failures of the milling machine 1 can also be determined automatically. In the exemplary embodiment shown in FIG. 3, two features or operating parameters, namely the electrical supply current I and the rotational speed R, are used to train the machine learning model. In one possible embodiment, the trained machine learning model requires a relatively small storage space of less than 10 MB. This makes it possible to implement the adaptive algorithm from a cloud platform 6 on an automation device. The method according to the invention can be scaled in a simple manner for a large number of milling machines 1. In one possible embodiment, the machine learning module 4 supplies evaluation numbers for the anomalies recognized or possible failure probabilities. In a possible embodiment of the method according to the invention, the operating parameters P are evaluated using a trained, adaptive algorithm on a server of the cloud platform 6 on the basis of operating data that are sent from one or more milling machines via the network 5 to the server of the cloud platform 6 are transferred. In one possible embodiment, the adaptive algorithm can be downloaded from a database as an application and executed by the artificial intelligence module 4 after the training has taken place. In one possible embodiment, the machine learning module 4 can be provided locally in the milling machine 1, as shown in Figure 2, or implemented remotely on a server of a cloud platform 6, as shown in Figure 3.

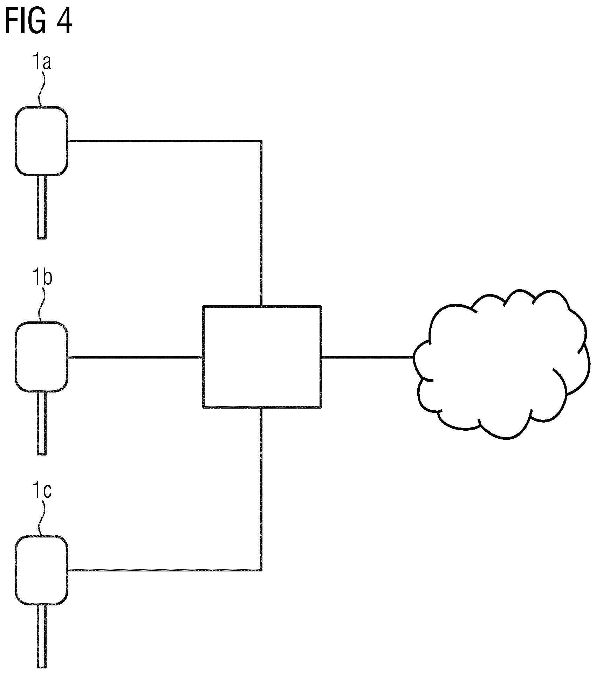

Turning to Figure 4, a production line comprising multiple milling machines 1a, 1b, 1c is shown. The milling machines 1a, 1b, 1c may be coupled to a gateway or other kind of device providing connectivity to a cloud platform. A machine learning model may be associated with each of the milling machines 1a, 1b, 1c. As each milling machine is used at a different station in the production line the tasks and operating modes as well as the workpieces being produced by the milling machines may differ. In addition, the operator of the production may have milling machines of different vendors installed in the production line. Hence, the milling machines may differ with respect to the characteristic operating setpoints, e.g., regarding rotational speed and current in particular.

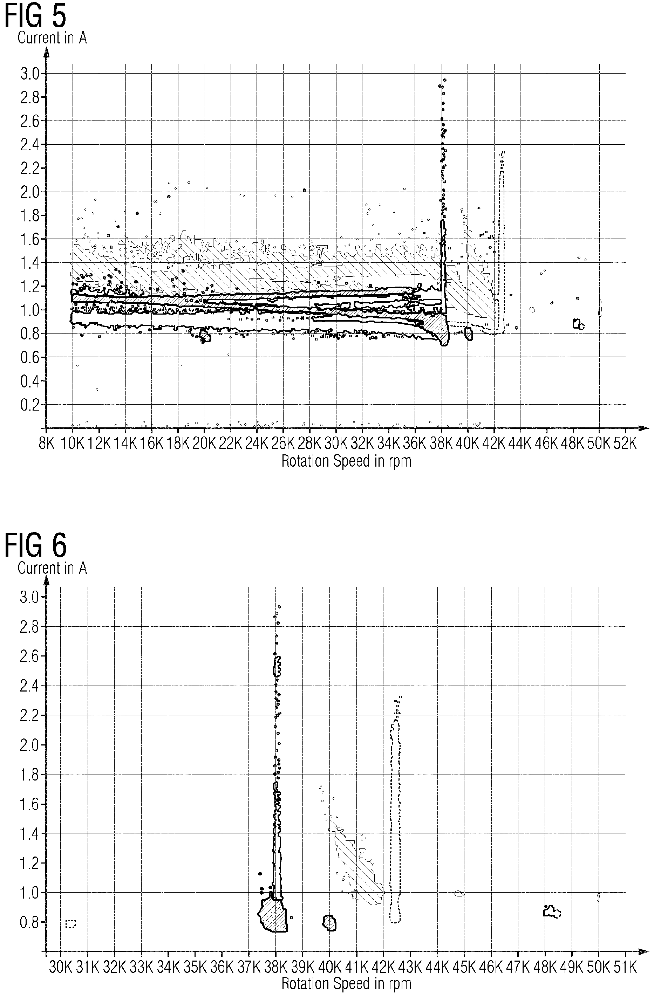

The different operational spaces of different milling machines are shown in Figure 5. Figure 5 shows the scatter plot of the rotational speed (x-axis) and the electrical current (y-axis) for different types of milling spindles and/or milling machines. The red, orange and yellow scatter plots show anomalies, whereas the blue scatterplot is free of anomalies. The anomaly is reflected in the large values for the electrical current. This is due to the fact, that the motor tries to keep the milling frequency constant during operation. However, if milling dust makes the spindle stuck, the current needs to be increased in order to keep the frequency or rotational speed constant. One can easily see that an anomaly of one spindle is not necessarily similar or on the same scale as the one of other spindles. Different spindles work on different scales of rotational speed and current. For this reason, a model is trained or fine-tuned after deployment of the machine learning model in order to learn the scales, at which the spindle operates, automatically.

Now turning to Figure 6, before fine-tuning the data is pre-processed in order to remove ramp-up and ramp-down phases of the spindle. These phases occur when a milling spindle starts (ramp-up) or stops (ramp-down). After the removal, the current and speed should be rather constant during the milling process, since the spindle operates with constant current and speed. The remaining, preprocessed data is shown in the scatter plot of Figure 6. The different operating modes of the spindle may thus be identified. For instance, the spindle corresponding to the blue scatter plot has two different operation modes: one at 36 k rpm and the other one at 40 k rpm.

Subsequently, the preprocessed data is fed into the machine learning model. This model may be operated in at least two phases: a calibration and a prediction phase.

During the calibration phase the machine learning model may be trained. The machine learning model may be One-Step-Ahead Predictor, a Spatial Detector, or Naïve Threshold.

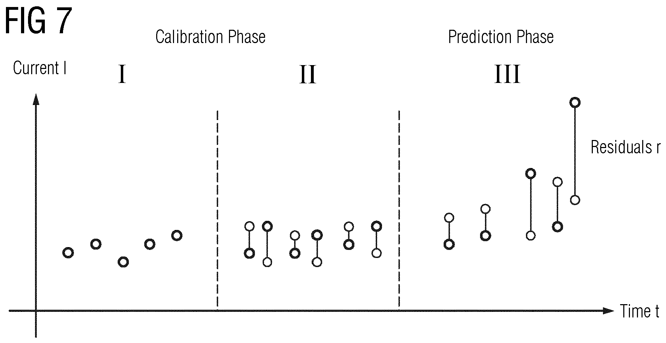

Figure 7 shows the two different phases. During the calibration phase first time series data is obtained and the model, e.g. an autoregressive integrated moving average model (ARIMA) of category is trained on the data of interval I. This model is then used in Interval II to compare predictions (green dots), e.g. made by a One-Step-Ahead predictor, to the observed data (white dots). This leads to a distribution over the residuals (differences between observation and prediction) and defines the domain for the residuals of normal operation. There is no need for a very precise fit or machine learning model for the data in interval I. The only requirement is that the machine learning model is able to make better predictions for normal data than for anomalous data.

In the interval III (prediction phase) the residuals are computed and compared to the distribution of interval II. If the distance to the median or mean of the distribution is too large (e.g. in terms of inter quartile ranges or standard deviations) the corresponding data point may be identified as an anomaly.

Further details of the machine learning model, especially the One-step-Ahead Predictor, may be found in Environmental Modelling & Software 25 (2010) 1014-1022 / D.J. Hill, B.S. Minsker "Anomaly detection in streaming environmental sensor data: A data-driven modeling approach".

The same (two-phases) approach can be employed for a machine learning model in the form of a spatial detector, where for instance a one class support vector machine is trained on the time series data of interval I, comprising time series data of current I and rotational speed S. An anomaly score may be computed based on a distribution of times series data during the interval II, e.g. by calculating the distances to the hyperplane of the support vector. Afterwards, the anomaly score computed during the prediction phase (interval III) can be compared with the distribution.

Alternatively, a Naïve Threshold model may be employed. In that case, a threshold may be computed using the data of the two time series data of an interval, e.g. the time series data of intervals I and II. Subsequently, new time series data, e.g., of interval III, may be compared to that threshold.

Depending on the specific underlying model, e.g. as described in the above, the intervals I, II and III may also move forward in time, leading to a type of continuous learning. However, the model and the time series data may need to fulfill one or more of the following requirements:
1. No overfitting by using small data sets (in order to make the duration of the calibration phase short; around 24 hours).
2. Fast predictions (low latency).
3. Computationally cheap (do not require a huge amount of memory and cpu; can easily run on an edge device).
4. Interval I and II should not contain any (or only a few) anomalies.

Furthermore, the prediction phase (Interval III) may be divided in multiple windows. For example, in one or more large window, L, and a plurality of small windows, S. Then the distribution of the scores of the small windows may be compared to the large windows. This leads to a model which automatically updates the distribution (of Interval II), but does not need to be retrained. That is to say, the interval I is not needed again but nonetheless allows finding local anomalies, i.e. in the small window S, by comparing the anomaly score to a larger context, i.e. window L.

Furthermore, an aggregation of the of used models is proposed. Here, a majority vote is proposed. Therein, if most detectors, e.g., the majority, identify/label a data point as an anomaly, the data point is altogether identified as an anomaly.

Finally, a hysteresis may be implemented, i.e. that an alert is sent to the customer (only) if a certain number of anomalies occurred in a defined time frame in order to reduce the number of false alarms.

In general, the untrained machine learning model may be packaged as Apps in an App store, e.g., on a cloud platform as described in the above, that customers can download and apply to their respective (milling) machines. During the calibration phase which may start automatically, e.g., after the download, the parameters for the anomaly detection model are learned. Furthermore, the methods proposed may be implemented at the customer's machine as a service delivery. Furthermore, a cloud platform, such as MindSphere, solution can be offered for a fleet of milling machines with further service and maintenance offerings.

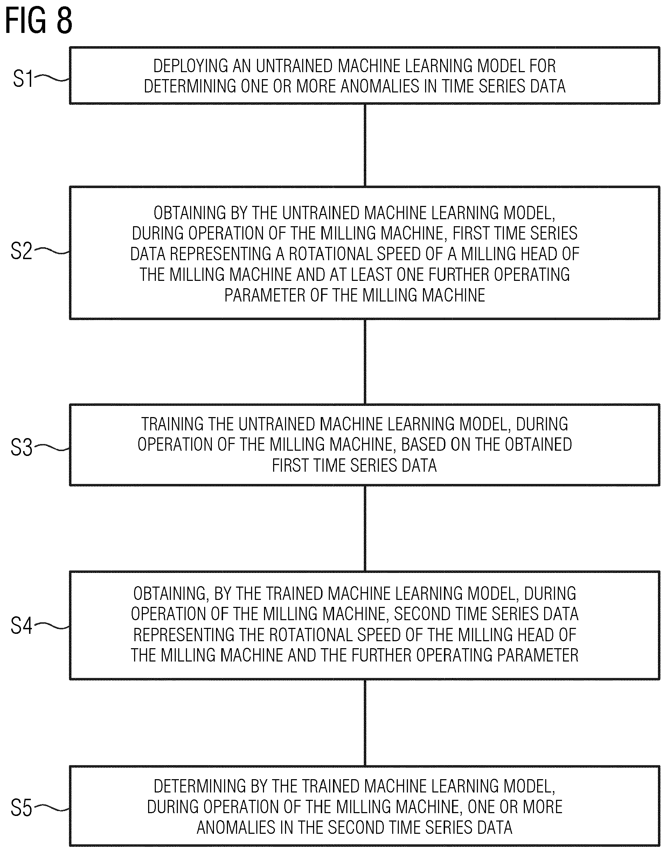

Turning to Figure 8 further exemplary method steps are shown. In a first step S1, it is proposed to deploy an untrained machine learning model for determining one or more anomalies in time series data. Herein, untrained shall mean uninitialized. Untrained may also be understood as referring to a machine learning model which variables/parameters are initialized at the time of deployment, e.g., by assigning random values to the variables/parameters, but are later overwritten during training or by training the machine learning model.

For example, the program code, e.g., Python, in which the machine learning model is written, may comprise variables or parameter to be trained, wherein the variables or parameters are not initialized in the untrained machine learning model. In that case, the variables/parameters are still unknown and are set "on the fly" during training, i.e. during calibration phase, e.g. comprising intervals I and II of Figure 7. The machine learning model may be used to observe the spindle of the milling machine during the training, e.g., during the first hours of operation of the milling machine and derives the variable/parameters from it. Only then the machine learning model can be used for "predicting" or calculating the anomaly score.

The simpler the machine learning model, the lower the hours or data amount of the first time series data needed. To that end, it is preferred that the first time series data comprises different operating states, preferably all operating states of a milling machine, in order to learn the (nominal) behavior of the milling machine. This is because operating states may vary from milling machine to milling machine, in particular from spindle to spindle. To that end, it has been found that the first time series data optimally covers a time period of two weeks.

Thus, in a second step S2, during operation of the milling machine, first time series data representing a rotational speed of a milling head of the milling machine and at least one further operating parameter of the milling machine may be obtained by the untrained machine learning model. As mentioned, the supply current is controlled for the milling machine or the milling process to operate with constant rotational speed and hence the supply current is increased if the spindle becomes stuck, e.g., in case of one or more splinters.

As mentioned, the first time series data may be obtained during the first or initial operating hours of the milling machine - assuming that during that time the operation of the machine is nominal.

In a third step S3, the untrained machine learning model, is trained during operation of the milling machine, based on the obtained first time series data. This allows, for example, to enhance existing milling machine and production line installations by the monitoring method proposed without interrupting operation.

In a fourth step S4, the trained machine learning model, obtains during operation of the milling machine, second time series data representing the rotational speed of the milling head of the milling machine and the further operating parameter, such as the supply current.

The first and/or second time series data may be obtained from a CPU, PLC and/or Controller of the milling machine, a converter powering the milling machine and/or from sensor elements attached to the milling machine.

In a fifth step S5, the trained machine learning model determined, during operation of the milling machine, one or more anomalies in the second time series data.

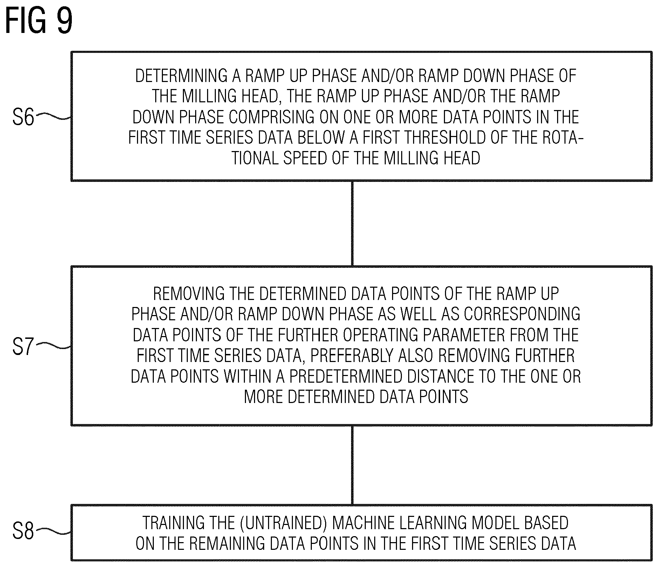

Turning to Figure 9, further steps of an exemplary method are shown.

In a step S6, a ramp up phase and/or ramp down phase of the milling head is determined. The ramp up phase and/or the ramp down phase comprising on one or more data points in the first time series data below a first threshold of the rotational speed of the milling head.

In a step S7, the determined data points of the ramp up phase and/or ramp down phase are removed from the first time series data. In addition, corresponding data points of the further operating parameter may be removed from the first time series data, preferably also removing further data points within a predetermined distance to the one or more determined data points.

In a step S8, the untrained machine learning model is then trained based on the remaining data points in the first time series data.

In addition, or alternatively, data points in the first time series data between a ramp down phase and a consecutive ramp up phase of the milling head are removed.

It should be understood that steps S6, S7 and S8 may be performed in combination with steps S1 to S5, preferably between steps S2 and S3and/or between steps S4 and S5, or may be performed independently, i.e. historical data may be treated as described in steps S6 to S8.

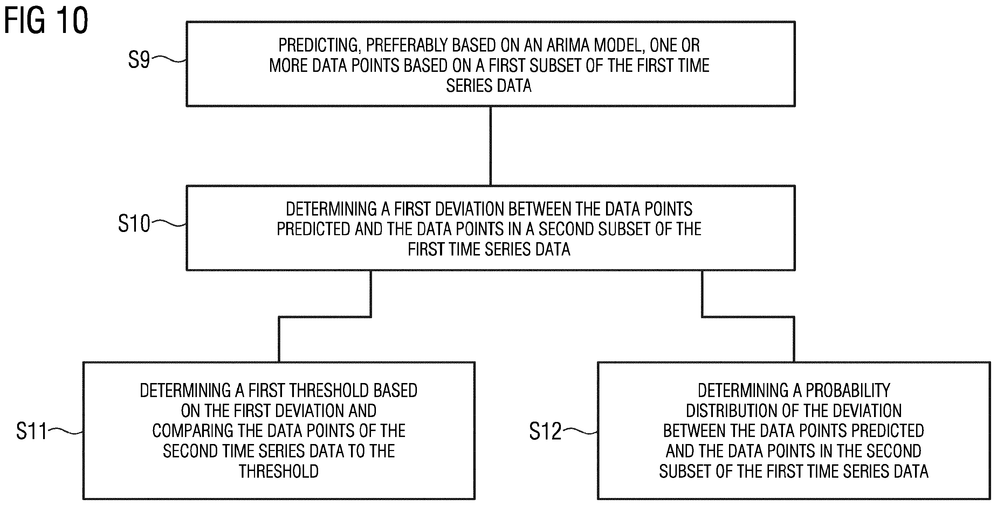

Turning to Figure 10, further steps of an exemplary method are shown.

In a step S9, preferably based on an ARIMA model, one or more data points are predicted based on a first subset of the first time series data. The prediction may be part of the training of the untrained machine learning model. To that end, one or more data points of the first time series data are used for predicting future data points in the time series.

In a step S10, a first deviation between the data points predicted and the data points in a second subset of the first time series data is calculated. To that end, first time series data is divided into a first subset that serves as the basis of the prediction and a second subset that is used for comparison of the predicted values with actual values. The first subset serves for fitting the prediction model, e.g., ARIMA, the seconds subset determines which residuals are "normal" and during the predicting phase (comprising the second time series data) a simple "comparison" is done, for example, how many inter quartile ranges is the new residual away from the median.

Now, in a step S11, a first threshold is determined based on the first deviation. The first threshold then may be compared to the data points of the second time series data. Thus, an anomaly may be determined, e.g. during operation of the milling machine, based on that comparison, since the threshold serves as a measure for determining whether the second time series data are characteristic of nominal behavior. The previously untrained machine learning model is then trained.

Alternatively, in a step S12, a probability distribution of the deviation between the data points predicted and the data points in the second subset of the first time series data may be determined. Thus, the distribution of the deviation from our forecast/predicted value is determined. The advantage is that it is possible to detect anomalies that do not only contain a deviating absolute value of the data, but rather it is the deviation to the normal point of operation, which is individual to each milling machine, that is considered when determining an anomaly. The previously untrained machine learning model is then trained.

It should be understood that steps S9 to S11 or S9 to S12 may be performed in combination with the method steps of Figures 8 and/or 9 or may be performed independently.

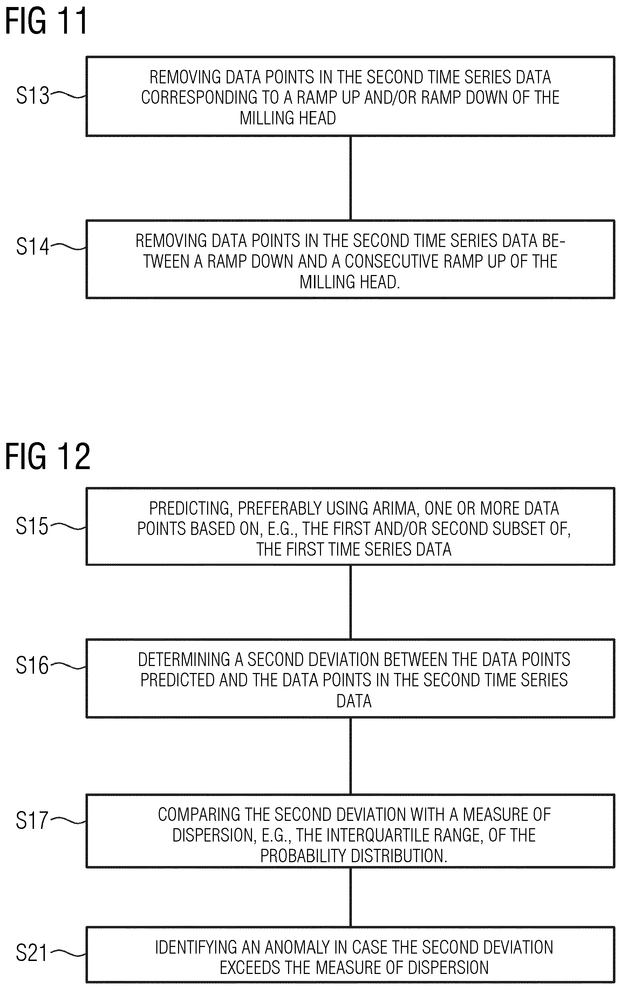

Turning to Figure 11, in a step S13, data points in the second time series data corresponding to a ramp up and/or ramp down of the milling head, are removed. Additionally, or alternatively, data points in the second time series data between a ramp down and a consecutive ramp up of the milling head are removed. Thereby a data set, i.e. second time series data, comparable to the first time series data is obtained.

Turning to Figure 12, in a step S15, preferably using ARIMA, one or more data points may be predicted based on, e.g., the first and/or second subset of, the first time series data.

Now, the second time series data may comprise data indicative of the behavior later during the lifetime of the milling machine, e.g. the second time series data may be indicative of wear of the milling head or other non-normal behavior.

In a step S16, a second deviation between the data points predicted and the data points in the second time series data may be determined.

In a step S17, the second deviation is compared with a measure of dispersion, e.g., the interquartile range, of the probability distribution. As mentioned, the proposed method and embodiments allow monitoring of milling machines, each of which has its own operation characteristics.

In a subsequent step S21, an anomaly is identified in case the second deviation exceeds the measure of dispersion. The identified anomaly may be output. Furthermore, a counter may be increased in case an anomaly is detected. Based on the counter a remaining useful life or outer maintenance measure may be initiated.

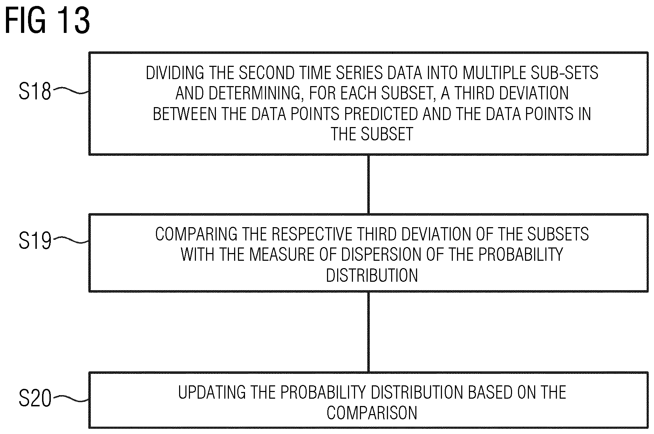

Turning to Figure 13, in a step S18, the second time series data is divided into multiple sub-sets and determining, for each subset, a third deviation between the data points predicted and the data points in the subset, and in a step S19, the respective third deviation of the subsets is compared with the measure of dispersion of the probability distribution, and in a step S20, the probability distribution is updated based on the comparison.

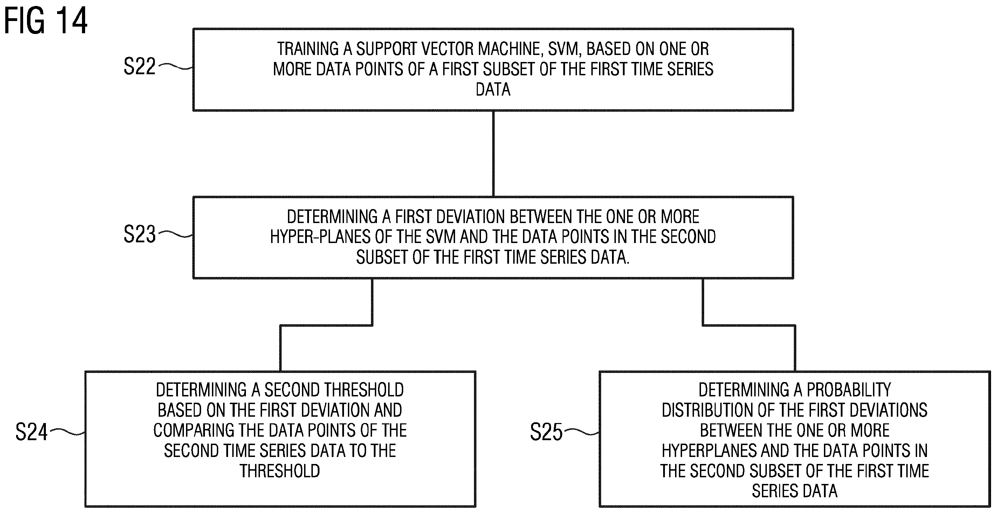

Now turning to Figure 14, in a step S22, a Support Vector Machine, SVM, is trained based on one or more data points of a first subset of the first time series data. In a step S23, a first deviation between the one or more hyper-planes of the SVM and the data points in the second subset of the first time series data is determined.

In a step S24, a second threshold based on the first deviation is determined and wherein the second threshold serves for comparing the data points of the second time series data to the second threshold.

Alternatively, in a step S25, a probability distribution of the first deviations between the one or more hyperplanes and the data points in the second subset of the first time series data is determined. The machine previously untrained learning model is then trained.

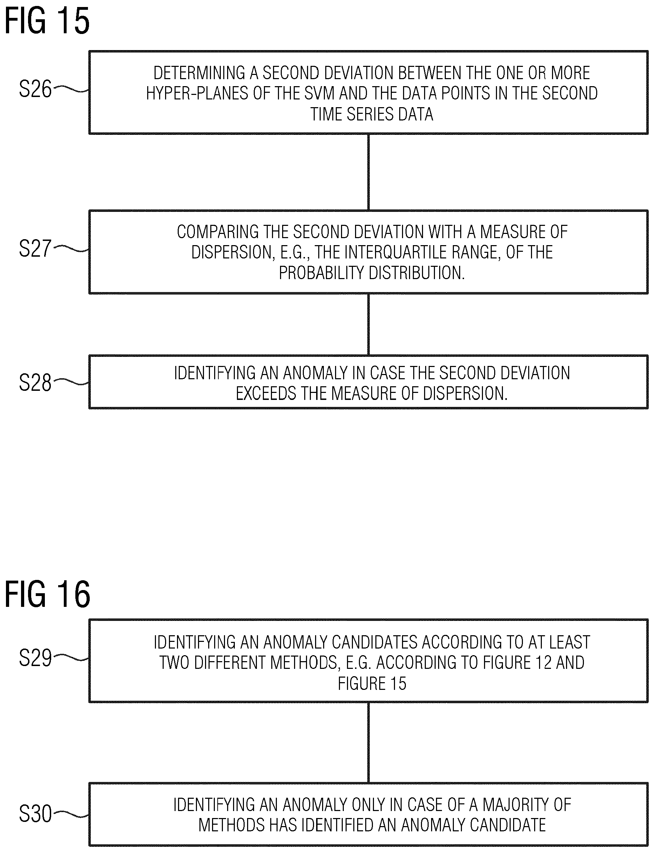

Turning to Figure 15, in a step S26, a second deviation between the one or more hyper-planes of the SVM and the data points in the second time series data is determined. In a subsequent step S27, the second deviation is compared with a measure of dispersion, e.g., the interquartile range, of the probability distribution. In a step S28, an anomaly is identified in case the second deviation exceeds the measure of dispersion.

Turning to Figure 16, in a step S29, anomaly candidates, i.e. one or more data points, are determined according to at least two different methods, e.g. according to the embodiments of Figure 12 and Figure 15. An anomaly then is identified only if both methods yield the same result. In case more than the two methods are employed, the majority of the results may then decide whether the anomaly candidates are identified as anomalies.

## Claims

1. A method of monitoring a milling machine (1) comprising the steps of:
- deploying (S1) an untrained machine learning model (M) for determining one or more anomalies in time series data;
- obtaining (S2) by the untrained machine learning model (M), during operation of the milling machine (1), first time series data (I, II) representing a rotational speed of a milling head of the milling machine (1) and at least one further operating parameter of the milling machine (1); and
- training (S3) the untrained machine learning model (M), during operation of the milling machine (1), based on the obtained first time series data (I, II),
- obtaining (S4), by the trained machine learning model (M), during operation of the milling machine, second time series data (III) representing the rotational speed of the milling head of the milling machine (1) and the further operating parameter,
- determining (S5) by the trained machine learning model (M), during operation of the milling machine (1), one or more anomalies in the second time series data (III),
**characterized in** further steps
- determining a ramp up phase and/or ramp down phase of the milling head, the ramp up phase and/or the ramp down phase comprising on one or more data points in the first time series data (I, II) below a first threshold of the rotational speed of the milling head,
- removing the determined data points of the ramp up phase and/or ramp down phase as well as corresponding data points of the further operating parameter from the first time series data (I, II),
- removing data points in the first time series (I, II) data between the ramp down phase and the consecutive ramp up phase of the milling head,
- training the untrained machine learning model based on the remaining data points in the first time series data (I, II).

2. The method according to the preceding claim wherein training the untrained machine learning model (M) based on the first time series data comprises:
- predicting based on a first subset (I) of the first time series data (I, II) one or more data points.

3. The method according to any one of the preceding claims wherein training the untrained machine learning model (M) based on the first time series data comprises:
- determining a first deviation between the one or more data points predicted and the one or more data points in a second subset (II) of the first time series data (I, II).

4. The method according to claim 3 wherein training the untrained machine learning model (M) based on the first time series data comprises:
determining the first threshold based on the first deviation, wherein the first threshold serves for comparing the data points of the second time series data (III) to the threshold.

5. The method according to any one of the preceding claims 3 or 4 wherein training the untrained machine learning model (M) based on the first time series data comprises:
- determining a probability distribution of the deviation between the data points predicted and the data points in the second subset (II) of the first time series (I, II) data.

6. The method according to any one of the preceding claims wherein determining by the trained machine learning model, during operation of the milling machine (1), one or more anomalies based on second time-series data (III) comprises:
- removing data points in the second time series data (III) corresponding to the ramp up and/or the ramp down of the milling head, and/or
- removing data points in the second time series data (III) between a ramp down and a consecutive ramp up of the milling head.

7. The method according to any one of the preceding claims wherein determining by the trained machine learning model (M), during operation of the milling machine, one or more anomalies based on second time-series data comprises:
- predicting, one or more data points based on, the first time series data (I, II),
- determining a second deviation between the data points predicted and the data points in the second time series data (III).

8. The method according to claim 7 wherein determining by the trained machine learning model, during operation of the milling machine, one or more anomalies based on second time-series data comprises:
- comparing the second deviation with a measure of dispersion, e.g., the interquartile range, of the probability distribution.

9. The method according to claim 8 further comprising:
- dividing the second time series data (III) into multiple subsets and determining, for each subset, a third deviation between the data points predicted and the data points in the subset, and
- comparing the respective third deviation of the subsets with the measure of dispersion of the probability distribution, and
- updating the probability distribution based on the comparison.

10. The method according to one of the claims 8 and 9,
wherein determining by the trained machine learning model (M), during operation of the milling machine, one or more anomalies based on second time-series data comprises:
- identifying an anomaly in case the second deviation exceeds the measure of dispersion.

11. The method according to any one of the preceding claims 3 to 10 wherein training the untrained machine learning model (M) based on the first time series data (I, II) comprises:
determining a second threshold based on the first deviation and comparing the data points of the second time series data to the threshold.

12. The method according to any one of the preceding claims 4 and 6-11 wherein training the untrained machine learning model based on the first time series data comprises:
- determining a probability distribution of the first deviation between the one or more hyperplanes and the data points in the second subset (II) of the first time series data (I, II).

13. The method according to any of the claims 7-9 wherein determining by the trained machine learning model, during operation of the milling machine (1), one or more anomalies based on second time-series data comprises:
- comparing the second deviation with a measure of dispersion, e.g., the interquartile range, of the probability distribution.

14. An apparatus, being operative to perform the method steps of any one of the claims 1 to 13.

15. A computer program product comprising program code that when executed by the apparatus of claim 14 performs the method steps of any one of the claims 1 to 13.

## Patentansprüche

1. Verfahren zum Überwachen einer Fräsmaschine (1), das folgende Schritte umfasst:
- Einsetzen (S1) eines untrainierten Machine-Learning-Modells (M) zum Ermitteln einer oder mehrerer Anomalien in Zeitreihendaten,
- Erfassen (S2) erster Zeitreihendaten (I, II), die eine Drehzahl eines Fräskopfes der Fräsmaschine (1) darstellen, und mindestens eines weiteren Betriebsparameters der Fräsmaschine (1) durch das untrainierte Machine-Learning-Modell (M) beim Betrieb der Fräsmaschine (1) und
- Trainieren (S3) des untrainierten Machine-Learning-Modells (M) beim Betrieb der Fräsmaschine (1) auf der Grundlage der erfassten ersten Zeitreihendaten (I, II),
- Erfassen (S4) zweiter Zeitreihendaten (III), die die Drehzahl des Fräskopfes der Fräsmaschine (1) darstellen, und des weiteren Betriebsparameters durch das trainierte Machine-Learning-Modell (M) beim Betrieb der Fräsmaschine,
- Ermitteln (S5) einer oder mehrerer Anomalien in den zweiten Zeitreihendaten (III) durch das trainierte Machine-Learning-Modell (M) beim Betrieb der Fräsmaschine (1),
**gekennzeichnet durch** weitere Schritte:
- Ermitteln einer Hochlaufphase und/oder einer Auslaufphase des Fräskopfes, wobei die Hochlaufphase und/oder die Auslaufphase einen oder mehrere Datenpunkte in den ersten Zeitreihendaten (I, II) umfassen, die unter einem ersten Schwellenwert für die Drehzahl des Fräskopfes liegen,
- Entfernen der ermittelten Datenpunkte der Hochlaufphase und/oder der Auslaufphase sowie entsprechender Datenpunkte des weiteren Betriebsparameters aus den ersten Zeitreihendaten (I, II),
- Entfernen von Datenpunkten in den ersten Zeitreihendaten (I, II) zwischen der Auslaufphase und der nachfolgenden Hochlaufphase des Fräskopfes,
- Trainieren des untrainierten Machine-Learning-Modells auf der Grundlage der verbleibenden Datenpunkte in den ersten Zeitreihendaten (I, II).

2. Verfahren nach dem vorhergehenden Anspruch, wobei das Trainieren des untrainierten Machine-Learning-Modells (M) auf der Grundlage der ersten Zeitreihendaten Folgendes umfasst:
- Prognostizieren eines oder mehrerer Datenpunkte auf der Grundlage eines ersten Teilsatzes (I) der ersten Zeitreihendaten (I, II).

3. Verfahren nach einem der vorhergehenden Ansprüche, wobei das Trainieren des untrainierten Machine-Learning-Modells (M) auf der Grundlage der ersten Zeitreihendaten Folgendes umfasst:
- Ermitteln einer ersten Abweichung zwischen dem einen oder den mehreren prognostizierten Datenpunkten und dem einen oder den mehreren Datenpunkten in einem zweiten Teilsatz (II) der ersten Zeitreihendaten (I, II).

4. Verfahren nach Anspruch 3, wobei das Trainieren des untrainierten Machine-Learning-Modells (M) auf der Grundlage der ersten Zeitreihendaten Folgendes umfasst:
Ermitteln des ersten Schwellenwerts auf der Grundlage der ersten Abweichung, wobei der erste Schwellenwert zum Vergleichen der Datenpunkte aus den zweiten Zeitreihendaten (III) mit dem Schwellenwert dient.

5. Verfahren nach einem der vorhergehenden Ansprüche 3 oder 4, wobei das Trainieren des untrainierten Machine-Learning-Modells (M) auf der Grundlage der ersten Zeitreihendaten Folgendes umfasst:
- Ermitteln einer Wahrscheinlichkeitsverteilung der Abweichung zwischen den prognostizierten Datenpunkten und den Datenpunkten im zweiten Teilsatz (II) der ersten Zeitreihendaten (I, II).

6. Verfahren nach einem der vorhergehenden Ansprüche, wobei das Ermitteln einer oder mehrerer Anomalien auf der Grundlage der zweiten Zeitreihendaten (III) durch das trainierte Machine-Learning-Modell beim Betrieb der Fräsmaschine (1) Folgendes umfasst:
- Entfernen von Datenpunkten in den zweiten Zeitreihendaten (III) entsprechend dem Hochlaufen und/oder dem Auslaufen des Fräskopfes und/oder
- Entfernen von Datenpunkten in den zweiten Zeitreihendaten (III) zwischen einer Auslaufphase und einer nachfolgenden Hochlaufphase des Fräskopfes.

7. Verfahren nach einem der vorhergehenden Ansprüche, wobei das Ermitteln einer oder mehrerer Anomalien auf der Grundlage der zweiten Zeitreihendaten durch das trainierte Machine-Learning-Modell (M) beim Betrieb der Fräsmaschine Folgendes umfasst:
- Prognostizieren eines oder mehrerer Datenpunkte auf der Grundlage der ersten Zeitreihendaten (I, II),
- Ermitteln einer zweiten Abweichung zwischen den prognostizierten Datenpunkten und den Datenpunkten in den zweiten Zeitreihendaten (III).

8. Verfahren nach Anspruch 7, wobei das Ermitteln einer oder mehrerer Anomalien auf der Grundlage der zweiten Zeitreihendaten durch das trainierte Machine-Learning-Modell beim Betrieb der Fräsmaschine Folgendes umfasst:
- Vergleichen der zweiten Abweichung mit einem Streuungsmaß, z.B. dem Interquartilsabstand, der Wahrscheinlichkeitsverteilung.

9. Verfahren nach Anspruch 8, das ferner Folgendes umfasst:
- Unterteilen der zweiten Zeitreihendaten (III) in mehrere Teilsätze und für jeden Teilsatz Ermitteln einer dritten Abweichung zwischen den prognostizierten Datenpunkten und den Datenpunkten im Teilsatz und
- Vergleichen der jeweiligen dritten Abweichung der Teilsätze mit dem Streuungsmaß der Wahrscheinlichkeitsverteilung und
- Aktualisieren der Wahrscheinlichkeitsverteilung auf der Grundlage des Vergleichs.

10. Verfahren nach einem der Ansprüche 8 und 9,
wobei das Ermitteln einer oder mehrerer Anomalien auf der Grundlage der zweiten Zeitreihendaten durch das trainierte Machine-Learning-Modell (M) beim Betrieb der Fräsmaschine Folgendes umfasst:
- Erkennen einer Anomalie, falls die zweite Abweichung das Streuungsmaß übersteigt.

11. Verfahren nach einem der vorhergehenden Ansprüche 3 bis 10, wobei das Trainieren des untrainierten Machine-Learning-Modells (M) auf der Grundlage der ersten Zeitreihendaten (I, II) Folgendes umfasst:
Ermitteln eines zweiten Schwellenwerts auf der Grundlage der ersten Abweichung und Vergleichen der Datenpunkte aus den zweiten Zeitreihendaten mit dem Schwellenwert.

12. Verfahren nach einem der vorhergehenden Ansprüche 4 und 6-11, wobei das Trainieren des untrainierten Machine-Learning-Modells auf der Grundlage der ersten Zeitreihendaten Folgendes umfasst:
- Ermitteln einer Wahrscheinlichkeitsverteilung der ersten Abweichung zwischen der einen oder mehreren Hyperebenen und den Datenpunkten im zweiten Teilsatz (II) der ersten Zeitreihendaten (I, II).

13. Verfahren nach einem der Ansprüche 7-9, wobei das Ermitteln einer oder mehrerer Anomalien auf der Grundlage der zweiten Zeitreihendaten durch das trainierte Machine-Learning-Modell beim Betrieb der Fräsmaschine (1) Folgendes umfasst:
- Vergleichen der zweiten Abweichung mit einem Streuungsmaß, z.B. dem Interquartilsabstand, der Wahrscheinlichkeitsverteilung.

14. Vorrichtung, die zum Durchführen der Verfahrensschritte nach einem der Ansprüche 1 bis 13 dient.

15. Computerprogrammprodukt, das Programmcode umfasst, der, wenn er von der Vorrichtung nach Anspruch 14 ausgeführt wird, die Verfahrensschritte nach einem der Ansprüche 1 bis 13 durchführt.

## Revendications

1. Procédé de surveillance d'une fraiseuse (1) comprenant les étapes suivantes :
- le déploiement (S1) d'un modèle d'apprentissage automatique (M) non entraîné pour la détermination d'une ou de plusieurs anomalies dans des données en série chronologique ;
- l'obtention (S2), par le modèle d'apprentissage automatique (M) non entraîné, pendant le fonctionnement de la fraiseuse (1), de premières données en série chronologique (I, II) représentant une vitesse de rotation d'une tête de fraisage de la fraiseuse (1) et au moins un paramètre de fonctionnement supplémentaire de la fraiseuse (1) ; et
- l'entraînement (S3) du modèle d'apprentissage automatique (M) non entraîné, pendant le fonctionnement de la fraiseuse (1), sur la base des premières données en série chronologique (I, II) obtenues,
- l'obtention (S4), par le modèle d'apprentissage automatique (M) entraîné, pendant le fonctionnement de la fraiseuse, de deuxièmes données en série chronologique (III) représentant la vitesse de rotation de la tête de fraisage de la fraiseuse (1) et le paramètre de fonctionnement supplémentaire,
- la détermination (S5), par le modèle d'apprentissage automatique (M) entraîné, pendant le fonctionnement de la fraiseuse (1), d'une ou de plusieurs anomalies dans les deuxièmes données en série chronologique (III),
**caractérisé par** les étapes supplémentaires de
- la détermination d'une phase de montée en régime et/ou d'une phase de baisse de régime de la tête de fraisage, la phase de montée en régime et/ou la phase de baisse de régime comprenant un ou plusieurs points de données dans les premières données en série chronologique (I, II) au-dessous d'un premier seuil de la vitesse de rotation de la tête de fraisage,
- le retrait des points de données déterminés de la phase de montée en régime et/ou de la phase de baisse de régime ainsi que des points de données correspondants du paramètre de fonctionnement supplémentaire à partir des premières données en série chronologique (I, II),
- le retrait de points de données dans les premières données en série chronologique (I, II) entre la phase de baisse de régime et la phase de montée en régime consécutive de la tête de fraisage,
- l'entraînement du modèle d'apprentissage automatique non entraîné sur la base des points de données restants dans les premières données en série chronologique (I, II).

2. Procédé selon la revendication précédente dans lequel l'entraînement du modèle d'apprentissage automatique (M) non entraîné sur la base des premières données en série chronologique comprend :
- la prédiction, sur la base d'un premier sous-ensemble (I) des premières données en série chronologique (I, II), d'un ou de plusieurs points de données.

3. Procédé selon l'une quelconque des revendications précédentes dans lequel l'entraînement du modèle d'apprentissage automatique (M) non entraîné sur la base des premières données en série chronologique comprend :
- la détermination d'un premier écart entre les un ou plusieurs points de données prédits et les un ou plusieurs points de données dans un deuxième sous-ensemble (II) des premières données en série chronologique (I, II).

4. Procédé selon la revendication 3 dans lequel l'entraînement du modèle d'apprentissage automatique (M) non entraîné sur la base des premières données en série chronologique comprend :
la détermination du premier seuil sur la base du premier écart, dans lequel le premier seuil sert à comparer les points de données des deuxièmes données en série chronologique (III) avec le seuil.

5. Procédé selon l'une quelconque des revendications 3 ou 4 précédentes dans lequel l'entraînement du modèle d'apprentissage automatique (M) non entraîné sur la base des premières données en série chronologique comprend :
- la détermination d'une distribution de probabilité de l'écart entre les points de données prédits et les points de données dans le deuxième sous-ensemble (II) des premières données en série chronologique (I, II).

6. Procédé selon l'une quelconque des revendications précédentes dans lequel la détermination, par le modèle d'apprentissage automatique entraîné, pendant le fonctionnement de la fraiseuse (1), d'une ou de plusieurs anomalies sur la base des deuxièmes données en série chronologique (III) comprend :
- le retrait de points de données dans les deuxièmes données en série chronologique (III) correspondant à la montée en régime et/ou à la baisse de régime de la tête de fraisage, et/ou
- le retrait de points de données dans les deuxièmes données en série chronologique (III) entre une baisse de régime et une montée en régime consécutive de la tête de fraisage.

7. Procédé selon l'une quelconque des revendications précédentes dans lequel la détermination, par le modèle d'apprentissage automatique (M) entraîné, pendant le fonctionnement de la fraiseuse, d'une ou de plusieurs anomalies sur la base des deuxièmes données en série chronologique comprend :
- la prédiction d'un ou de plusieurs points de données sur la base des premières données en série chronologique (I, II),
- la détermination d'un deuxième écart entre les points de données prédits et les points de données dans les deuxièmes données en série chronologique (III).

8. Procédé selon la revendication 7 dans lequel la détermination, par le modèle d'apprentissage automatique entraîné, pendant le fonctionnement de la fraiseuse, d'une ou de plusieurs anomalies sur la base des deuxièmes données en série chronologique comprend :
- la comparaison du deuxième écart avec une mesure de dispersion, par ex., l'étendue interquartile, de la distribution de probabilité.

9. Procédé selon la revendication 8 comprenant en outre :
- la division des deuxièmes données en série chronologique (III) en multiples sous-ensembles et la détermination, pour chaque sous-ensemble, d'un troisième écart entre les points de données prédits et les points de données dans le sous-ensemble, et
- la comparaison du troisième écart respectif des sous-ensembles avec la mesure de dispersion de la distribution de probabilité, et
- la mise à jour de la distribution de probabilité sur la base de la comparaison.

10. Procédé selon l'une des revendications 8 et 9,
dans lequel la détermination, par le modèle d'apprentissage automatique (M) entraîné, pendant le fonctionnement de la fraiseuse, d'une ou de plusieurs anomalies sur la base des deuxièmes données en série chronologique comprend :
- l'identification d'une anomalie dans le cas où le deuxième écart dépasse la mesure de dispersion.

11. Procédé selon l'une quelconque des revendications 3 à 10 précédentes dans lequel l'entraînement du modèle d'apprentissage automatique (M) non entraîné sur la base des premières données en série chronologique (I, II) comprend :
la détermination d'un deuxième seuil sur la base du premier écart et la comparaison des points de données des deuxièmes données en série chronologique avec le seuil.

12. Procédé selon l'une quelconque des revendications 4 et 6 à 11 précédentes dans lequel l'entraînement du modèle d'apprentissage automatique non entraîné sur la base des premières données en série chronologique comprend :
- la détermination d'une distribution de probabilité du premier écart entre les un ou plusieurs hyper-plans et les points de données dans le deuxième sous-ensemble (II) des premières données en série chronologique (I, II).

13. Procédé selon l'une quelconque des revendications 7 à 9 dans lequel la détermination, par le modèle d'apprentissage automatique entraîné, pendant le fonctionnement de la fraiseuse (1), d'une ou de plusieurs anomalies sur la base des deuxièmes données en série chronologique comprend :
- la comparaison du deuxième écart avec une mesure de dispersion, par ex., l'étendue interquartile, de la distribution de probabilité.

14. Appareil ayant pour fonction de réaliser les étapes de procédé selon l'une quelconque des revendications 1 à 13.

15. Produit de programme informatique comprenant un code de programme qui, lorsqu'il est exécuté par l'appareil selon la revendication 14, réalise les étapes de procédé selon l'une quelconque des revendications 1 à 13.
